(19) Europäisches Patentamt
European Patent Office
Office européen des brevets

(11) Numéro de publication: **0 007 838**
**B1**

(12) **FASCICULE DE BREVET EUROPEEN**

(45) Date de publication du fascicule de brevet: **02.09.81**

(21) Numéro de dépôt: **79400467.1**

(22) Date de dépôt: **06.07.79**

(51) Int. Cl.³: **C 09 K 11/465, C 01 F 17/00, H 01 J 35/18, H 01 J 29/20**

(54) **Substances luminescentes à base d'europium divalent, émettant dans le bleu, leurs procédés de préparation et leurs utilisations.**

(30) Priorité: **28.07.78 FR 7822351**

(43) Date de publication de la demande:
**06.02.80 Bulletin 80/3**

(45) Mention de la délivrance du brevet:
**02.09.81 Bulletin 81/35**

(84) Etats Contractants Désignés:
**BE DE FR GB IT NL**

(56) Documents cités:
**US - A - 3 790 490**
**US - A - 3 866 083**

(73) Titulaire: **RHONE-POULENC INDUSTRIES**
**22, avenue Montaigne**
**F-75008 Paris (FR)**

(72) Inventeur: **Fouassier, Claude**
**Résidence Saint-Géry 12 rue de la Chênaie**
**F-33170 Gradignan (FR)**
Inventeur: **Garcia, Alain**
**46, rue Frédéric Mistral**
**F-47000 Passage d'Agen (FR)**
Inventeur: **Latourrette, Bertrand**
**4, Square Xavier Monteny**
**F-93220 Gagny (FR)**

(74) Mandataire: **Savina, Jacques et al,**
**RHONE POULENC Service Brevets Chimie et Polymères B.P. 753**
**F-75360 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 007 838 B1

# Substances luminescentes à base d'europium divalent, émettant dans le bleu, leurs procédés de préparation et leurs utilisations

La présente invention a pour objet de nouvelles substances luminescentes; plus particulièrement, elle concerne des substances luminescentes à base d'europium divalent émettant dans le bleu. L'invention concerne également un procédé de préparation de ces luminophores bleus et leur application dans tout système exploitant la luminescence dans la région spectrale concernée.

Au sens de la présente invention, on entend par luminophore bleu une substance qui, convenablement excitée, émet dans un domaine de longueurs d'ondes comprises entre 430 nm environ et 500 nm environ. Ces substances peuvent être excitées, par exemple, par un rayonnement ultraviolet, X ou cathodique.

On connait dans l'art antérieur un certain nombre de luminophores bleus. C'est ainsi que les composés les plus couramment commercialisés sont les luminophores $CaWO_4$:Pb et ZnS:Ag. Ces substances luminescentes présentent comme principal inconvénient d'avoir une bande d'émission très large, ce qui se traduit par l'obtention d'une couleur impure englobant de la lumière violette et de la lumière verte. De plus, le luminophore bleu $CaWO_4$:Pb ne peut être excite par les tubes à mercure haute pression dont la raie principale se situe à 365 nm. Quant au luminophore ZnS:Ag, s'il peut être excité par la raie du mercure haute pression, l'intensité de l'émission correspondante est relativement faible, ce qui limite sérieusement son application dans le domaine de l'éclairage en particulier.

On connait aussi dans l'art antérieur des matrices permettant la luminescence de l'europium divalent dans le bleu. Ce sont, par exemple, $Sr_5(PO_4)_3Cl$ et $Ca_2PO_4Cl$. Ces phosphates ont comme principal inconvénient de donner avec l'europium une luminescence dans le bleu dont l'intensité, comparable à celle obtenue avec la substance ZnS:Ag, n'est pas entièrement satisfaisante.

On voit donc que subsiste le besoin de luminophores bleus ayant à la fois une bande d'émission étroite et de forte intensité et pouvant être excités dans un grand domaine de longueurs d'ondes.

Les brevets américains n° 3 866 083 et 3 790 490 décrivent des matériaux luminescents répondant à la formule $Sr_5Si_4Cl_6O_{10}:Eu^{2+}$. La fluorescence de ces matériaux est située dans le domaine compris entre 400 et 650 nm avec un maximum à 490 nm par ailleurs la tenue thermique de ces matériaux s'avère peu satisfaisante.

La présente invention a pour but de fournir de nouvelles substances luminescentes à base d'europium divalent émettant dans le bleu avec un maximum d'émission vers 440 nm environ et présentant une tenue thermique bien supérieure aux matériaux de l'art antérieur décrits ci-dessus.

L'invention a donc pour objet une substance luminescente à base d'europium divalent émettant dans le bleu, caractérisée en ce qu'elle a pour formule:

$$M_{5(1-\alpha)}\,Eu^{2+}_{5\alpha}\,SiO_4\,X_6 \quad (I)$$

dans laquelle:

— M représente $Ba_{1-\beta}Sr_\beta$ ou $Ba_{1-\beta}Ca_\beta$, $\beta$ étant supérieur ou égal à 0 et inférieur ou égal à environ 0,1 ($0 \leqslant \beta \leqslant 0{,}1$),

— $\alpha$ est supérieur à 0 et inférieur ou égal à environ 0,2 ($0 \leqslant \alpha \leqslant 0{,}2$),

— X représente $Cl_{1-\gamma}Br_\gamma$, $\gamma$ étant supérieur ou égal à 0 et inférieur ou égal à environ 1 ($0 \leqslant \gamma \leqslant 1$).

$\alpha$ est, de préférence, compris entre environ 0,003 et environ 0,03. $\beta$ est, de préférence, supérieur ou égal à 0 et inférieur on égal à 0,05 environ.

Plus particulièrement, l'invention a pour objet des substances telles que définies ci-dessus, caractérisées en ce que $\alpha$ est compris entre environ 0,003 et environ 0,03 et en ce que $\beta = 0$.

Des substances luminescentes selon l'invention, particulièrement préférees, sont telles que $\beta = 0$, $\alpha = 0{,}02$, ce qui correspond à la formule:

$$Ba_{4,90}\,Eu^{2+}_{0,10}\,SiO_4\,X_6$$

Un autre objet de l'invention est un procédé de préparation d'une substance luminescente de formule I, caractérisé en ce que l'on fait subir à un mélange constitué:

— de silice,

— d'un composé oxygéné du baryum et, éventuellement de strontium ou de calcium,

— de chlorure et/ou bromure de baryum et éventuellement de strontium ou de calcium,

— d'un composé d'europium,

au moins un traitement thermique en milieu réducteur à une température comprise entre environ 700°C et environ 850°C pendant un temps compris entre environ 1 heure et environ 25 heures, chaque traitement thermique étant éventuellement suivi d'un broyage.

Selon une variante du procédé selon l'invention, on effectue préalablement au traitement thermique en milieu réducteur au moins un traitement thermique sous atmosphère inerte à une température comprise entre environ 700°C et environ 850°C, pendant un temps compris entre environ 1 heure et environ 25 heures, chaque traitement thermique étant éventuellement suivi d'un broyage.

L'intérêt de cette variante est qu'elle permet de diminuer la durée du traitement en milieu réducteur.

Selon un mode de mise en oeuvre particulier du procédé selon l'invention, on fait subir au mélange défini ci-dessus un premier traitement thermique sous atmosphère inerte à une température comprise entre 750°C environ et 820°C environ pendant 15 heures à 20 heures environ et après broyage, un second traitement thermique sous atmosphère réductrice à une température comprise entre 750°C environ et 820°C environ pendant 1 à 5 heures environ.

Selon un mode de mise en oeuvre préféré, le composé oxygéné du baryum est choisi parmi le groupe comprenant l'oxyde BaO, le carbonate $BaCO_3$ et le nitrate $Ba(NO_3)_2$; le composé oxygéné du strontium est choisi parmi le groupe comprenant l'oxyde SrO, le carbonate $SrCO_3$ et le nitrate $Sr(NO_3)_2$; le composé oxygéné du calcium est choisi parmi le groupe comprenant l'oxyde CaO, le carbonate $CaCO_3$ et le nitrate $Ca(NO_3)_2$; le composé d'europium est choisi parmi le groupe comprenant l'oxyde $Eu_2O_3$, les chlorures $EuCl_2$ et $EuCl_3$, les bromures $EuBr_2$ et $EuBr_3$, et le nitrate $Eu(NO_3)_3$.

Bien entendu, il est possible de remplacer l'un des composés de départ, notamment les oxydes, par des sels minéraux susceptibles de former ces composés dans les conditions de la réaction.

La pression n'est pas critique, on opère généralement sous pression atmosphérique.

On effectue habituellement le traitement thermique sous atmosphère inerte en utilisant de l'azote ou de l'argon et le traitement thermique en milieu réducteur en utilisant une atmosphère d'hydrogène ou en utilisant une nacelle de carbone, dans laquelle est disposé le mélange réactionnel.

Un autre objet de l'invention est l'application des substances luminescentes telles que définies ci-dessus dans tout système exploitant la luminescence dans la région spectrale concernée.

C'est ainsi que sous excitation ultra-violette, les substances selon l'invention (et plus particulièrement celles pour lesquelles $\alpha = 0{,}02$, $\beta = 0$) peuvent être utilisées pour l'éclairage dans les dispositifs fluoroescents, en particulier, les tubes ou lampes trichromatiques et pour l'obtention de lumière bleue notamment en diazocopie, ou pour des traitements médicaux tels que celui de l'hyperbilirubinémie. Sous excitation X, elles peuvent être utilisées dans la fabrication d'écrans renforçateurs de rayons X dans le domaine de la radiographie médicale. Enfin, sous excitation cathodique les substances selon l'invention peuvent être utilisées dans les dispositifs de visualisation multichromes notamment pour la télévision.

Les luminophores bleus selon l'invention se distinguent par une faible largeur de la bande d'émission et par une intensité elevée de cette dernière. En ce qui concerne l'excitation, ils présentent l'avantage de pouvoir être excités sur un grand domaine de longueurs d'ondes: c'est ainsi qu'ils peuvent être excités aussi bien par le rayonnement de lampes à mercure basse pression (raie principale à 253,7 nm) que par le rayonnement de lampes à mercure haute pression (raie principale à 365 nm).

Un autre avantage des luminophores découverts par la demanderesse est que, comme cela sera illustré plus loin, la variation thermique de l'émission observée montre que ces matériaux sont compatibles avec les dispositifs opérant à une température supérieure à la température ambiante.

D'autres caractéristiques et avantages de la présente invention apparaitront plus clairement à la lecture des exemples qui vont suivre et qui ne sauraient en aucune manière être considérés comme constituant une limitation de l'invention.

### Exemple 1

$Ba_{4,90}\,Eu^{2+}_{0,10}\,SiO_4\,Cl_6$ ($\alpha = 0{,}02$; $\beta = 0$; $\gamma = 0$)

On mélange à sec 2,2498 g de $BaCO_3$, 4,3970 g de $BaCl_2 \cdot 2H_2O$, 0,3605 g de $SiO_2$ et 0,1056 g de $Eu_2O_3$. On broie ce mélange jusqu'à obtention d'une poudre homogène.

On introduit cette poudre dans une nacelle en alumine que l'on dispose dans un four. On porte le four à 800°C et on le maintient à cette température pendant 20 heures sous courant d'azote.

Le produit obtenu est broyé jusqu'à obtention d'une poudre fine que l'on introduit de nouveau dans le four précédent. On laisse séjourner à 800°C pendant 2 heures sous courant d'hydrogène.

On obtient 5,9 g d'une poudre blanche insensible à l'action de l'humidité atmosphérique.

Le composé obtenu de formule $Ba_{4,90}Eu^{2+}_{0,10}\,SiO_4\,Cl_6$ se caractérisé par le spectre de diffraction X suivant, indexable sur la base d'une maille monoclinique ayant les paramètres suivants: $a = 9{,}45 \pm 0{,}05$ Å; $b = 14{,}75 \pm 0{,}05$ Å; $c = 11{,}69 \pm 0{,}05$ Å; $\beta = 104°\ 39^1$

Spectre de diffraction X de $Ba_{4,90}\,Eu^{2+}_{0,10}\,SiO_4\,Cl_6$

| I | $d_{obs.}$ Å | $d_{calc.}$ Å | h k l |
|---|---|---|---|
| 15 | 7,16 | 7,157 | 1 1 $\bar{1}$ |
| 15 | 6,19 | 6,181 | 0 2 1 |
| 35 | 4,58 | 4,579 | 2 0 0 |
| 73 | 4,18 | 4,179 | 1 1 2 |
| 10 | 4,09 | 4,092 | 2 0 $\bar{2}$ |
| 100 | 3,93 | 3,944 | 2 2 1 |
| 45 | 3,90 | 3,890 | 2 2 $\bar{0}$ |
| 50 | 3,72 | 3,719 | 1 1 $\bar{3}$ |
| 30 | 3,69 | 3,688 | 0 4 0 |
| 15 | 3,65 | 3,655 | 1 3 $\bar{2}$ |
| 20 | 3,58 | 3,578 | 2 2 $\bar{2}$ |
| 45 | 3,50 | 3,507 | 0 4 1 |
| 80 | 3,258 | 3,261 | 1 3 2 |
| 10 | 3,190 | 3,194 | 2 0 2 |
| 40 | 3,087 | 3,091 | 0 4 2 |
| 65 | 3,027 | 3,028 | 1 3 $\bar{3}$ |
| 60 | 2,988 | 2,989 | 3 1 0 |
| 10 | 2,928 | 2,931 | 2 2 2 |
| 15 | 2,864 | 2,863 | 1 1 $\bar{4}$ |
| 15 | 2,803 | 2,808 | 1 5 0 |
| 15 | 2,773 | 2,775 | 1 5 $\bar{1}$ |
| 60 | 2,736 | 2,739 | 2 4 $\bar{2}$ |
| 60 | 2,728 | 2,731 | 3 1 1 |
| 65 | 2,680 | 2,678 | 1 5 1 |
| 30 | 2,642 | 2,644 | 0 2 4 |
| 10 | 2,594 | 2,594 | 3 3 0 |
| 10 | 2,572 | 2,572 | 3 3 $\bar{2}$ |

Exemple 2

Préparation de $Ba_{4,975}$ $Eu^{2+}_{0,025}$ $SiO_4Cl_6$ ($\alpha = 0,005$, $\beta = 0$, $\gamma = 0$)

On opère comme dans l'exemple 1, mais en utilisant 1,8171 g de BaO, 3,7485 g de $BaCl_2$, 0,3605 g de $SiO_2$ et 0,0264 g de $Eu_2O_3$.

On obtient 5,8 g d'une poudre blanche insensible à l'humidité atmosphérique.

Exemple 3

Préparation de $Ba_{4,80}$ $Sr_{0,10}$ $Eu^{2+}_{0,02}$ $SiO_4Cl_6$ ($\alpha = 0,02$; $\beta = 0,02$; $\gamma = 0$)

On opère comme dans l'exemple 1, mais en utilisant 2,1314 g de $BaCO_3$, 0,0886 g de $SrCO_3$, 4,3970 g de $BaCl_2$, $2H_2O$, 0,3605 g de $SiO_2$ et 0,1056 g de $Eu_2O_3$. Le premier traitement thermique sous courant d'azote a lieu à 800°C pendant 20 heures, le second sous courant d'hydrogène à 800°C pendant 5 heures.

On obtient 5,8 g d'une poudre blanche insensible à l'humidité atmosphérique.

Exemple 4

Préparation de $Ba_{4,90}$ $Eu^{2+}_{0,10}$ $SiO_4$ $Br_6$ ($\alpha = 0,02$; $\beta = 0$; $\gamma = 1$).

On mélange à sec 2,2287 g de $BaBr_2$ et 0,906 g de $Ba_{1,90}$ $Eu^{2+}_{0,10}$ $SiO_4$ obtenu à partir de silice, d'oxyde d'europium et de carbonate de baryum.

On broie ce mélange jusqu'à obtention d'une poudre homogène. On introduit cette poudre dans une nacelle en alumine que l'on dispose dans un four. On porte le four à 800°C et on le maintient à cette température pendant 25 heures sous une atmosphère réductrice constituée d'un mélange d'argon avec dix pour cent d'hydrogène.

On obtient 3,149 g d'une poudre blanche très légèrement rosée insensible à l'action de l'humidité atmosphérique.

Le composé obtenu de formule $Ba_{4,90}$ $Eu^{2+}_{0,10}$ $SiO_4$ $Br_6$ se caractérise par le spectre de diffraction X suivant, indexable sur la base d'une maille monoclinique ayant les paramètres suivants:

$a = 9,75 \pm 0,05$ Å

$b = 15,22 \pm 0,05$ Å

$c = 12,07 \pm 0,05$ Å

$\beta = 104^0\ 7^1$

| Spectre de diffraction X de $Ba_{4,90}\,Eu^{2+}_{0,10}\,SiO_4\,Br_6$ | | | |
|---|---|---|---|
| I | $d_{obs.}$ Å | $d_{calc.}$ Å | h k l |
| 15 | 7,41 | 7,395 | 1 1 $\bar{1}$ |
| 10 | 6,38 | 6,373 | 0 2 1 |
| 15 | 5,80 | 5,836 | 0 0 2 |
| 15 | 4,73 | 4,715 | 2 0 0 |
| 50 | 4,28 | 4,296 | 1 1 $\bar{2}$ |
| 55 | 4,08 | 4,070 | 2 2 1 |
| 50 | 4,01 | 4,008 | 2 2 0 |
| 30 | 3,84 | 3,841 | 1 1 $\bar{3}$ |
| 10 | 3,81 | 3,804 | 0 4 0 |
| 35 | 3,70 | 3,698 | 2 2 $\bar{2}$ |
| 30 | 3,62 | 3,617 | 0 4 1 |
| 30 | 3,35 | 3,357 | 1 3 2 |
| 15 | 3,27 | 3,282 | 2 0 2 |
| 70 | 3,182 | 3,186 | 0 4 2 |
| 70 | 3,12 | 3,126 | 1 3 $\bar{3}$ |
| 100 | 3,08 | 3,078 | 3 1 0 |
| 30 | 3,00 | 3,014 | 2 2 2 |
| 10 | 2,95 | 2,955 | 1 1 $\bar{4}$ |
| 25 | 2,90 | 2,896 | 1 5 0 |
| 35 | 2,86 | 2,864 | 1 5 $\bar{1}$ |
| 100 | 2,83 | 2,829 | 2 4 $\bar{2}$ |
| 70 | 2,81 | 2,809 | 3 1 1 |
| 100 | 2,758 | 2,761 | 1 5 1 |
| 70 | 2,720 | 2,724 | 0 24 |
| 30 | 2,663 | 2,656 | 3 3 $\bar{2}$ |

Exemple 5

Préparation de $Ba_{4,85}$ $Eu^{2+}_{0,15}$ $SiO_4$ $Br_6$ ($\alpha = 0,03$; $\beta = 0$; $\gamma = 1$)

On opère comme dans l'exemple 1, mais en utilisant 2,9987 g de $BaBr_2.2H_2O$ et 1,1069 g de $Ba_{1,85}$ $Eu^{2+}_{0,15}$ $SiO_4$ obtenu à partir de silice, d'oxyde d'europium et de carbonate de baryum, et en effectuant deux premiers traitements thermiques à 800°C pendant 15 heures sous courant d'azote et un troisième à 800°C pendant 5 heures sous un courant gazeux réducteur constitué d'argon avec 10% d'hydrogène. Un broyage est effectué après chaque traitement thermique. On obtient 3,7812 g d'une poudre insensible à l'action de l'humidité atmosphérique.

Exemple 6

Préparation de $Ba_{4,90}$ $Eu^{2+}_{0,10}$ $SiO_4$ $Br_6$ ($\alpha = 0,02$; $\beta = 0$; $\gamma = 1$)

Comme dans l'exemple 1, on mélange à sec: 1,1249 g de $BaCO_3$, 0,0528 g de $Eu_2O_3$, 0,1803 g de $SiO_2$ et 2,9987 g de $BaBr_2.2H_2O$.

Ce mélange subit deux traitements thermiques de 15 h à 800°C sous courant d'azote ainsi qu'un troisième traitement à 800°C pendant 5 heures sous atmosphère réductrice constituée par de l'hydrogène, chaque traitement thermique étant suivi d'un broyage.

Exemple 7

Préparation de $Ba_{4,80}$ $Sr_{0,10}$ $Eu^{2+}_{0,10}$ $SiO_4$ $Cl_{5,70}$ $Br_{0,30}$ ($\alpha = 0,02$; $\beta = 0,02$; $\gamma = 0,05$)

On opère comme dans l'exemple 3, mais en utilisant 2,1314 g de $BaCO_3$, 0,1270 g de $Sr(NO_3)_2$, 4,1772 g de $BaCl_2.2H_2O$, 0,2028 g de $Eu(NO_3)_3$, 0,3605 g de $SiO_2$ et 0,2836 g de $BaBr_2$, $2H_2O$.

On obtient 5,9 g d'une poudre blanche insensible à l'humidité atmosphérique.

Exemple 8

Préparation de $Ba_{4,85}$ $Ca_{0,05}$ $Eu^{2+}_{0,10}$ $SiO_4$ $Cl_6$ ($\alpha = 0,02$; $\beta = 0,01$; $\gamma = 0$)

On opère comme dans l'exemple 3, mais en utilisant 2,1905 g de $BaCO_3$, 0,0300 g de $CaCO_3$, 4,3970 g de $BaCl_2.2H_2O$, 0,3605 g de $SiO_2$ et 0,1056 g de $Eu_2O_3$.

On obtient 5,8 g d'une poudre blanche insensible à l'humidité atmosphérique.

Exemple 9

Comparison du spectre d'émission des produits selon l'invention et du spectre d'émission des produits de l'art antérieur.

La figure 1 compare les spectres de $Ba_{4,90}$ $Eu^{2+}_{0,10}$ $SiO_4Cl_6$ (courbe A selon l'invention) et de $CaWO_4$:Pb (courbe X selon l'art antérieur).

On constate que la largeur de la bande d'émission du premier (30 nm à mi-hauteur) est beaucoup plus étroite que celle du second (95 nm à mi-hauteur).

On a constaté que les spectres de tous les autres composés selon l'invention sont sensiblement identiques à celui de $Ba_{4,90}$ $Eu^{2+}_{0,10}$ $SiO_4$ $Cl_6$.

Exemple 10

Comparaison du spectre d'excitation des produits selon l'invention et du spectre d'excitation des produits de l'art antérieur.

On a représenté sur la figure 2, les variations de l'intensité du maximum de la bande d'émission en fonction de la longueur d'onde d'excitation pour les luminophores selon l'invention des exemples 1 (courbe B), 3 (courbe C), 4 (courbe D), 7 (courbe E), et pour les luminophores de l'art antérieur $CaWO_4$:Pb (courbe Y) et ZnS:Ag (courbe Z).

Il apparait clairement à l'étude de cette figure que les luminophores bleus selon l'invention ont une émission beaucoup plus intense que ceux de l'art antérieur et peuvent être excités dans un domaine de longueur d'ondes beaucoup plus large.

Exemple 11

Variation thermique de l'intensité d'émission des produits de l'invention.

La figure 3 représente la variation de l'intensité sous excitation de longueur d'onde constante (365 nm) en fonction de la température, en ce qui concerne le composé de l'exemple 1 de formule $Ba_{4,90}$ $Eu^{2+}_{0,10}$ $SiO_4$ $Cl_6$.

On constate que la luminescence ne commence à chuter significativement qu'au delà de 300°C (à 300°C elle est encore égale à 90% de l'intensité à température ambiante). Dans de nombreux luminophores bleus del'art antérieur à base d'europium divalent, la luminescence de l'ion $Eu^{2+}$ chute au-delà de 100°C.

Exemple 12

Intensité en fonction du pourcentage d'europium divalent dans les produits selon l'invention sous excitation ultra-violette.

La figure 4 représente les variations de l'intensité en fonction de $\alpha$, $\beta$ et $\gamma$ étant nuls.

Exemple 13

Intensité en fonction du pourcentage de strontium dans les produits selon l'invention sous excitation ultra-violette.

La figure 5 représente la variation de l'intensité en fonction de $\beta$, $\alpha$ étant égale à 0,02 et $\gamma$ étant nul.

Exemple 14

Intensité en fonction du pourcentage de brome dans les produits selon l'invention sous excitation ultra-violette.

La figure 6 représente la variation de l'intensité en fonction de $\gamma$, $\alpha$ étant égale à 0,02 et $\beta$ étant nul.

**Revendications**

1. Substance luminescente à base d'europium divalent émettant dans le bleu, caractérisée en ce qu'elle a pour formule:

$$M_{5(1-\alpha)}\ Eu^{2+}_{5\alpha}\ SiO_4\ X_6 \quad (I)$$

dans laquelle:

— M représente $Ba_{1-\beta}\ Sr_\beta$ ou $Ba_{1-\beta}\ Ca_\beta$, $\beta$ étant supérieur ou égal à 0 et inférieur ou égal à 0,1;

— $\alpha$ est supérieur à 0 et inférieur ou égal à 0,2,

— X représente $Cl_{1-\gamma}\ Br_\gamma$, $\gamma$ étant supérieur ou égale à 0 et inférieur ou égal à 1.

2. Substance luminescente selon la revendication 1, caractérisée en ce que $\alpha$ est compris entre 0,003 et 0,03.

3. Substance luminescente selon la revendication 1, caractérisée en ce que $\beta$ est supérieur ou égal à 0 et inférieur ou égal à 0,05.

4. Substance luminescente selon la revendication 1, caractérisée en ce que $\alpha$ est compris entre 0,003 et 0,03, $\beta = 0$, et $0 \leqslant \gamma \leqslant 1$.

5. Substance luminescente selon la revendication 4, caractérisée en ce que $\alpha = 0{,}02$, $\beta = 0$, $0 \leqslant \gamma \leqslant 1$.

6. Procédé de préparation d'une substance luminescente selon l'une quelconque des revendications précédentes, caractérisé en ce que l'on fait subir à un mélange constitué:

— de silice,

— d'un composé oxygéné du baryum et éventuellement de strontium ou de calcium,

— de chlorure et/ou bromure de baryum et éventuellement de strontium ou de calcium,

— d'un composé d'europium

au moins un traitement thermique sous milieu réducteur, à une température comprise entre 700°C et 850°C pendant un temps compris entre 1 heure et 25 heures, chaque traitement thermique étant éventuellement suivi d'un broyage.

7. Procédé selon la revendication 6, caractérisé en ce que, préalablement au traitement thermique en milieu réducteur, on effectue au moins un traitement thermique sous atmosphère inerte à une température comprise entre 700°C et 850°C pendant un temps compris entre 1 heure et 25 heures.

8. Procédé selon les revendications 6 et 7, caractérisé en ce que l'on fait subir au mélange dans une première étape, un traitement thermique sous atmosphère inerte à une température comprise entre 750°C et 820°C, pendant un temps compris entre 15 heures et 20 heures, après broyage, dans une deuxième étape, un traitement thermique sous atmosphère réductrice à une température comprise entre 750°C et 820°C pendant un temps compris entre 1 heure et 5 heures.

9. Procédé selon la revendication 6, caractérisé en ce que le composé oxygéné du baryum est choisi parmi le groupe comprenant l'oxyde BaO, le carbonate $BaCO_3$ et le nitrate $Ba(NO_3)_2$.

10. Procédé selon la revendication 6, caractérisé en ce que le composé oxygéné du strontium est choisi parmi le groupe comprenant l'oxyde SrO, le carbonate $SrCO_3$ et le nitrate $Sr(NO_3)_2$.

11. Procédé selon la revendication 6, caractérisé en ce que le composé oxygéné du calcium est choisi parmi le groupe comprenant l'oxyde CaO, le carbonate $CaCO_3$ et le nitrate $Ca(NO_3)_2$.

12. Procédé selon la revendication 6, caractérisé en ce que le composé d'europium est choisi parmi le groupe comprenant l'oxyde $Eu_2O_3$, les chlorures $EuCl_2$ et $EuCl_3$, les bromures $EuBr_2$ et $EuBr_3$ et le nitrate $Eu(NO_3)_3$.

13. Procédé selon l'une quelconque des revendications 6, 7, 8 caractérisé en ce que l'on effectue le traitement thermique sous atmosphère réductrice en utilisant de l'hydrogène.

14. Procédé selon l'une quelconque des revendications 7, 8 caractérisé en ce que l'on effectue le traitement thermique sous atmosphère inerte en utilisant de l'azote.

15. Procédé de préparation d'une substance luminescente selon la revendication 5, caractérisé en ce que l'on broie jusqu'à obtention d'une poudre fine du carbonate de baryum, du chlorure de baryum, de la silice et de l'oxyde d'europium, on traite ce mélange à une température de 800°C pendant 20

heures, sous atmosphère d'azote, on broie le produit résultant jusqu'à obtention d'une poudre fine, et on traite cette poudre à une température de 800°C pendant 2 heures sous atmosphère d'hydrogène.

16. Application d'une substance luminescente selon l'une quelconque des revendications 1 à 5, à la fabrication de dispositifs fluorescents.

17. Application d'une substance luminescente selon l'une quelconque des revendications 1 à 5, à la fabrication d'écrans renforçateurs de rayons X.

18. Application d'une substance luminescente selon l'une quelconque des revendications 1 à 5, à la fabrication de dispositifs de visualisation multichrome.

## Claims

1. Luminescent substance based on divalent europium, which emits in the blue, characterised in that it has the formula:

$$M_{5(1-\alpha)}\ Eu^{2+}_{5\alpha}\ SiO_4\ X_6 \quad (I)$$

in which:

M represents $Ba_{1-\beta}Sr_\beta$ or $Ba_{1-\beta}Ca_\beta$, $\beta$ being greater than or equal to 0 and less than or equal to 0.1,

$\alpha$ is greater than 0 and less than or equal to 0.2 and

X represents $Cl_{1-\gamma}Br_\gamma$, $\gamma$ being greater than or equal to 0 and less than or equal to 1.

2. Luminescent substance according to Claim 1, characterised in that $\alpha$ is between 0.003 and 0.03.

3. Luminescent substance according to Claim 1, characterised in that $\beta$ is greater than or equal to 0 and less than or equal to 0.05.

4. Luminescent substance according to Claim 1, characterised in that $\alpha$ is between 0.003 and 0.03, $\beta = 0$ and $0 \ll \gamma \ll 1$.

5. Luminescent substance according to Claim 4, characterised in that $\alpha = 0.02$, $\beta = 0$ and $0 \ll \gamma \ll 1$.

6. Process for the preparation of a luminescent substance according to any one of the preceding claims, characterised in that a mixture consisting of:

silica,

an oxygen compound of barium and optionally of strontium or calcium,

the chloride and/or bromide of barium and optionally of strontium or calcium, and

a europium compound,

is subjected to at least one heat treatment in a reducing medium, at a temperature between 700°C and 850°C, for a period of between 1 hour and 25 hours, each heat treatment optionally being followed by grinding.

7. Process according to Claim 6, characterised in that, prior to the heat treatment in a reducing medium, at least one heat treatment is carried out under an inert atmosphere, at a temperature between 700°C and 850°C, for a period of between 1 hour and 25 hours.

8. Process according to Claims 6 and 7, characterised in that the mixture is subjected, in a first step to a heat treatment under an inert atmosphere, at a temperature between 750°C and 820°C, for a period of between 15 hours and 20 hours, and, after grinding, in a second step, to a heat treatment under a reducing atmosphere, at a temperature between 750°C and 820°C, for a period of between 1 hour and 5 hours.

9. Process according to Claim 6, characterised in that the oxygen compound of barium is chosen from amongst the group comprising the oxide, BaO, the carbonate, $BaCO_3$, and the nitrate, $Ba(NO_3)_2$.

10. Process according to Claim 6, characterised in that the oxygen compound of strontium is chosen from amongst the group comprising the oxide, SrO, the carbonate, $SrCO_3$, and the nitrate, $Sr(NO_3)_2$.

11. Process according to Claim 6, characterised in that the oxygen compound of calcium is chosen from amongst the group comprising the oxide CaO, the carbonate, $CaCO_3$, and the nitrate, $Ca(NO_3)_2$.

12. Process according to Claim 6, characterised in that the europium compound is chosen from amongst the group comprising the oxide, $Eu_2O_3$, the chlorides, $EuCl_2$ and $EuCl_3$, the bromides, $EuBr_2$ and $EuBr_3$, and the nitrate, $Eu(NO_3)_3$.

13. Process according to any one of Claims 6, 7 and 8, characterised in that the heat treatment under a reducing atmosphere is carried out using hydrogen.

14. Process according to either one of Claim 7 and 8, characterised in that the heat treatment under an inert atmosphere is carried out using nitrogen.

15. Process for the preparation of a luminescent substance according to Claim 5, characterised in that barium carbonate, barium chloride, silica and europium oxide are ground until a fine powder is obtained, this mixture is treated at a temperature of 800°C for 20 hours, under a nitrogen atmosphere,

the resulting product is ground until a fine powder is obtained, and this powder is treated at a temperature of 800°C for 2 hours, under a hydrogen atmosphere.

16. Application of a luminescent substance according to any one of Claims 1 to 5 to the manufacture of fluorescent devices.

17. Application of a luminescent substance according to any one of Claims 1 to 5 to the manufacture of X-ray intensifying screens.

18. Application of a luminescent substance according to any one of Claims 1 to 5 to the manufacture of multicoloured display devices.

**Patentansprüche**

1. Blau strahlende lumineszierende Substanz auf der Basis von zweiwertigem Europium, dadurch gekennzeichnet, daß die Formel

$$M_{5(1-\alpha)}\, Eu^{2+}_{5\alpha}\, SiO_4\, X_6 \quad (I)$$

hat, in der

— M $Ba_{1-\beta}Sr_\beta$ oder $Ba_{1-\beta}Ca_\beta$ bedeutet, wobei $\beta$ größer oder gleich 0 und kleiner oder gleich 0,1 ist,

— $\alpha$ größer 0 und kleiner oder gleich 0,2 ist

— X $Cl_{1-y}Br_y$ bedeutet, wobei $y$ größer oder gleich 0 und kleiner oder gleich 1 ist.

2. Lumineszierende Substanz nach Anspruch 1, dadurch gekennzeichnet, daß $\alpha$ einen Wert zwischen 0,003 und 0,03 hat.

3. Lumineszierende Substanz nach Anspruch 1, dadurch gekennzeichnet, daß $\beta$ größer oder gleich 0 und kleiner oder gleich 0,05 ist.

4. Lumineszierende Substanz nach Anspruch 1, dadurch gekennzeichnet, daß $\alpha$ zwischen 0,003 und 0,03, $\beta = 0$ und $0 \leqslant y \leqslant 1$ ist.

5. Lumineszierende Substanz nach Anspruch 4, dadurch gekennzeichnet, daß $\alpha = 0{,}02$, $\beta = 0$ und $0 \leqslant y \leqslant 1$ ist.

6. Verfahren zur Herstellung einer lumineszierenden Substanz nach irgendeinem der vorangehenden Ansprüche, dadurch gekennzeichnet, daß man eine Mischung, bestehend aus

— Kieselsäure,

— einer Sauerstoffverbindung des Bariums und eventuell des Strontiums oder Calciums,

— Chlorid und/oder Bromid von Barium und eventuell von Strontium oder Calcium und

— einer Europiumverbindung

wenigstens einer thermischen Behandlung unter reduzierender Atmosphäre bei einer Temperatur zwischen 700 und 850°C während einer Zeit zwischen 1 und 25 Stunden unterwirft, wobei jeder thermischen Behandlung gegebenenfalls eine Zerkleinerung folgt.

7. Verfahren nach Anspruch 6, dadurch gekennzeichnet, daß man vor der thermischen Behandlung in reduzierendem Milieu mindestens eine thermische Behandlung unter Inertatmosphäre bei einer Temperatur zwischen 700 und 850°C während einer Zeit zwischen 1 und 25 Stunden durchführt.

8. Verfahren nach den Ansprüchen 6 und 7, dadurch gekennzeichnet, daß man die Mischung in einer ersten Stufe einer thermischen Behandlung unter Inertatmosphäre bei einer Temperatur zwischen 750 und 820°C und während einer Zeit zwischen 15 und 20 Stunden unterwirft und nach einer Zerkleinerung in einer zweiten Stufe eine thermische Behandlung unter reduzierender Atmosphäre bei einer Temperatur zwischen 750 und 820°C während einer Zeit zwischen 1 und 5 Stunden durchführt.

9. Verfahren nach Anspruch 6, dadurch gekennzeichnet, daß die Sauerstoffverbindung des Bariums aus der das Oxid BaO, das Carbonat $BaCO_3$ und das Nitrat $Ba(NO_3)_2$ umfassenden Gruppe ausgewählt ist.

10. Verfahren nach Anspruch 6, dadurch gekennzeichnet, daß die Sauerstoffverbindung des Strontiums aus der das Oxid SrO, das Carbonat $SrCO_3$ und das Nitrat $Sr(NO_3)_2$ umfassenden Gruppe ausgewählt wird.

11. Verfahren nach Anspruch 6, dadurch gekennzeichnet, daß die Sauerstoffverbindung des Calciums aus der das Oxid CaO, das Carbonat $CaCO_3$ und das Nitrat $Ca(NO_3)_2$ umfassenden Gruppe ausgewählt wird.

12. Verfahren nach Anspruch 6, dadurch gekennzeichnet, daß die Europiumverbindung aus der das Oxid $Eu_2O_3$, die Chloride $EuCl_2$ und $EuCl_3$, die Bromide $EuBr_2$ und $EuBr_3$ und das Nitrat $Eu(NO_3)_3$umfassenden Gruppe ausgewählt wird.

13. Verfahren nach irgendeinem der Ansprüche 6, 7, 8, dadurch gekennzeichnet, daß man die thermische Behandlung unter reduzierender Atmosphäre durch Verwendung von Wasserstoff durchführt.

14. Verfahren nach einem der Ansprüche 7 oder 8, dadurch gekennzeichnet, daß man die thermische Behandlung unter Inertatmosphäre durch Verwendung von Stickstoff durchführt.

15. Verfahren zur herstellung einer lumineszierenden Substanz nach Anspruch 5, dadurch gekennzeichnet, daß man Bariumcarbonat, Bariumchlorid, Kieselsäure und Europiumoxid bis zum Erhalt

eines feinen Puders zerkleinert und diese Mischung bei einer Temperatur von 800°C 20 Stunden lang unter Stickstoffatmosphäre behandelt und daß erhaltene Produkt bis zum Erhalt eines feinen Puders zerkleinert und dieses Puder bei einer Temperatur von 800°C 2 Stunden lang unter Wasserstoffatmosphäre behandelt.

16. Verwendung einer lumineszierenden Substanz nach irgendeinem der Ansprüche 1 bis 5 zur Herstellung von fluoreszierenden Vorrichtungen.

17. Verwendung einer lumineszierenden Substanz nach irgendeinem der Ansprüche 1 bis 5 zur herstellung von verstärkenden Röntgenschirmen.

18. Verwendung einer lumineszierenden Substanz nach einem oder mehreren der Ansprüche 1 bis 5 zur Herstellung von Einrichtungen der multichromen Sichtbarmachung.

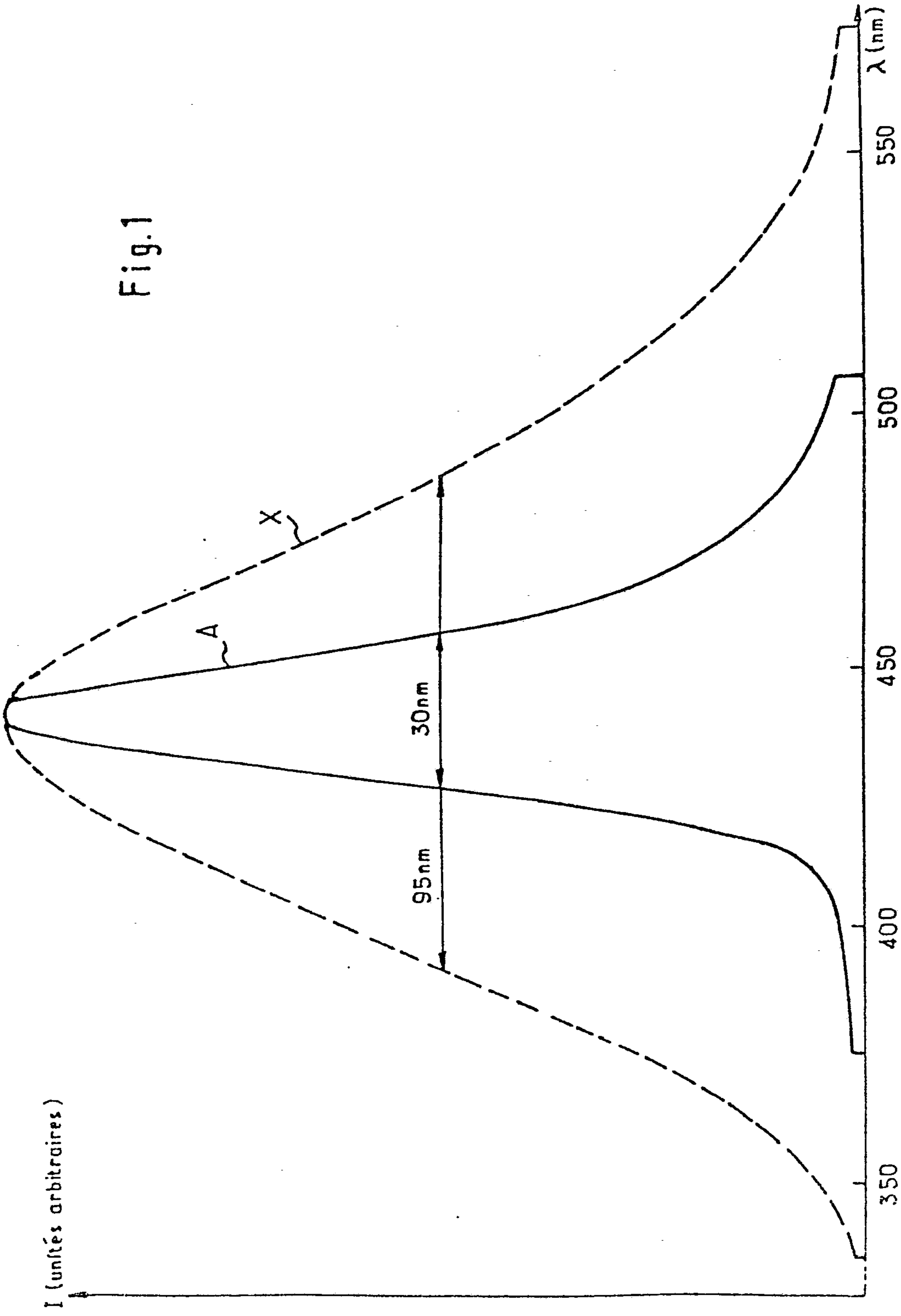


Fig.1

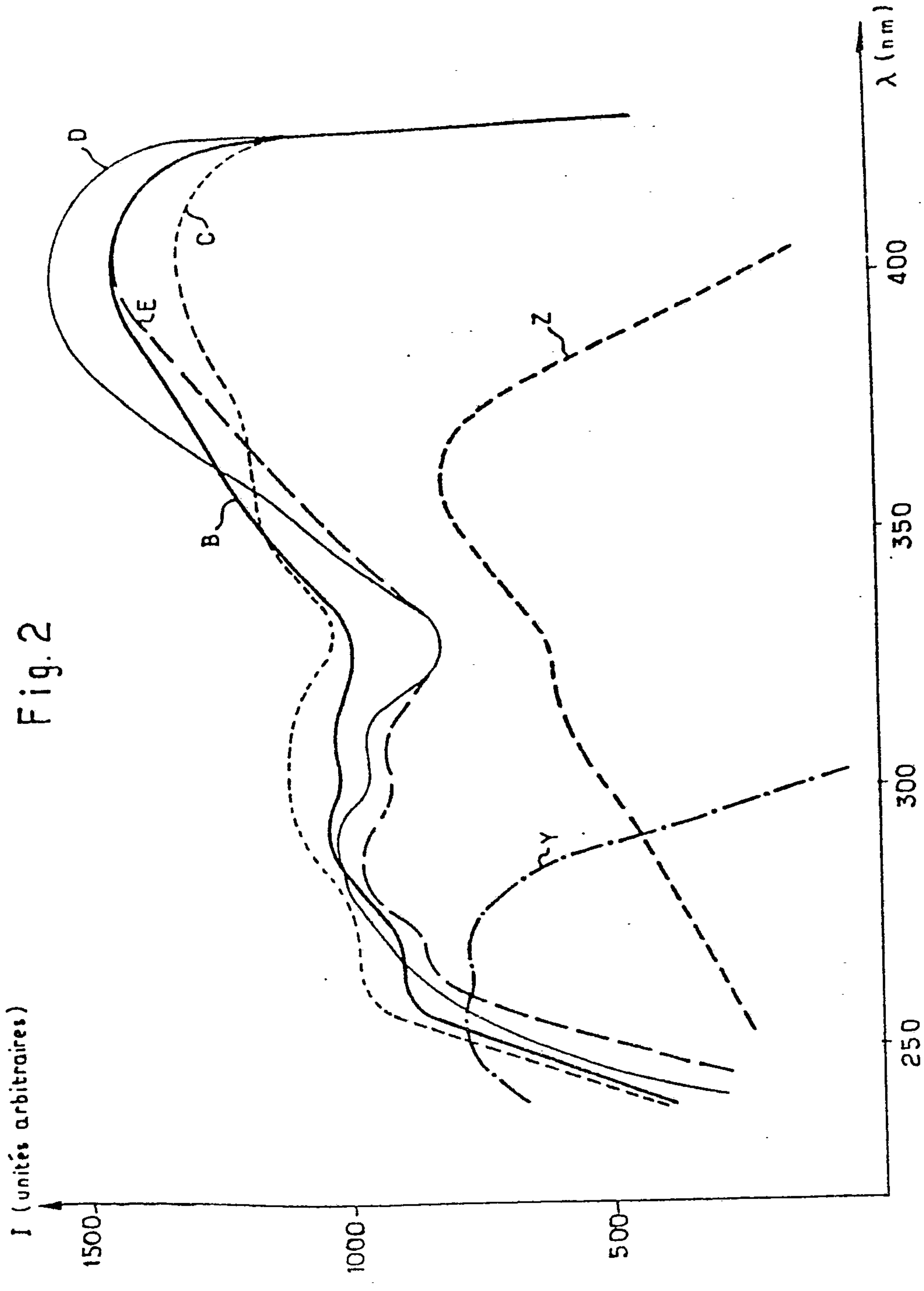
I (unités arbitraires)
1500
1000
500
250
300
350
400
λ (nm)
D
C
E
Z
B
Y

Fig. 2

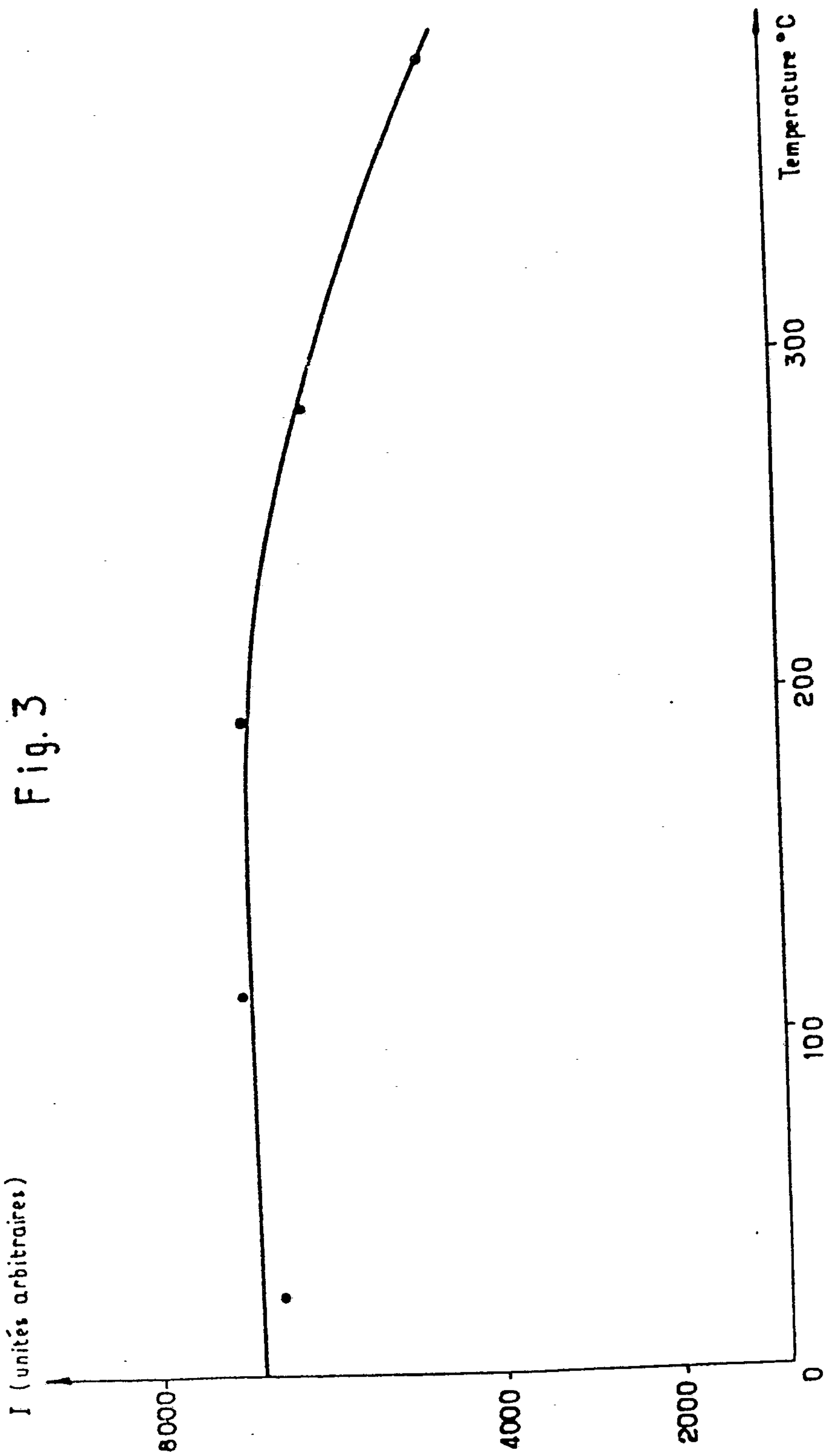
I (unités arbitraires)
8000
4000
2000
0
100
200
300
Temperature °C

Fig. 3

Fig. 4

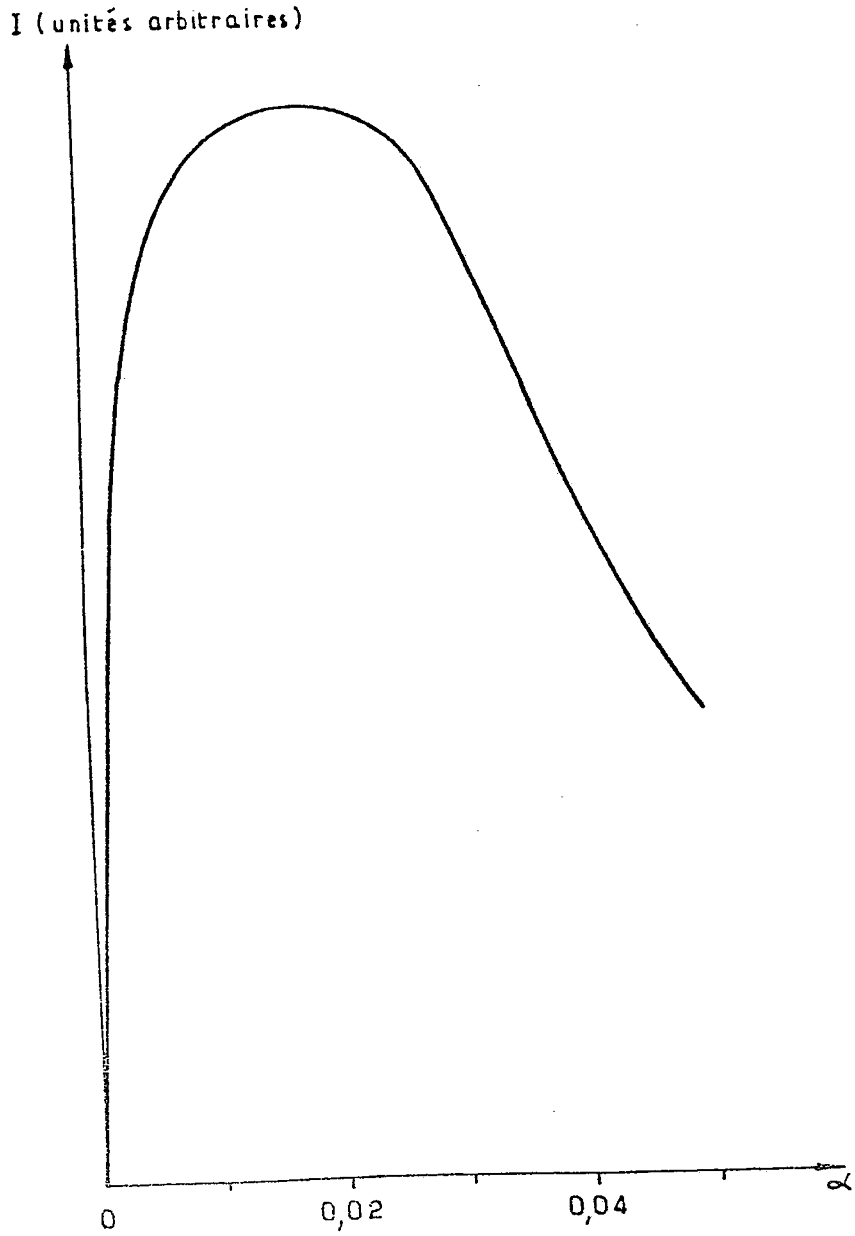

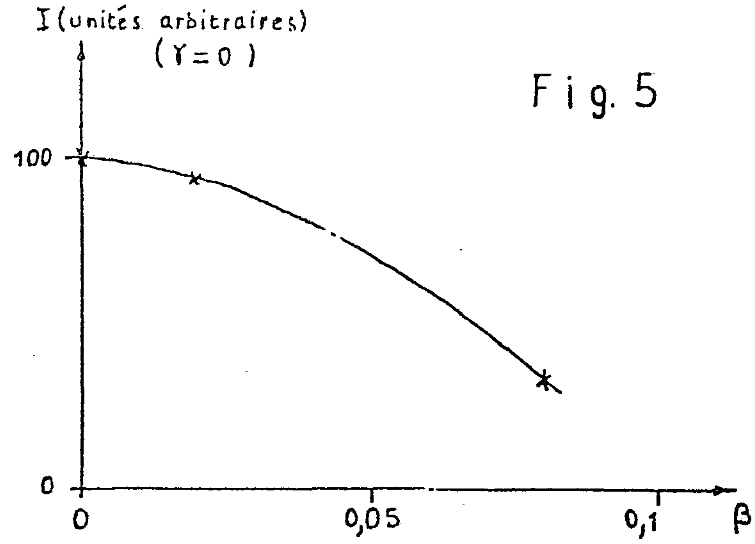
I (unités arbitraires)
(γ = 0)
100
0
0
0,05
0,1
β

Fig. 5

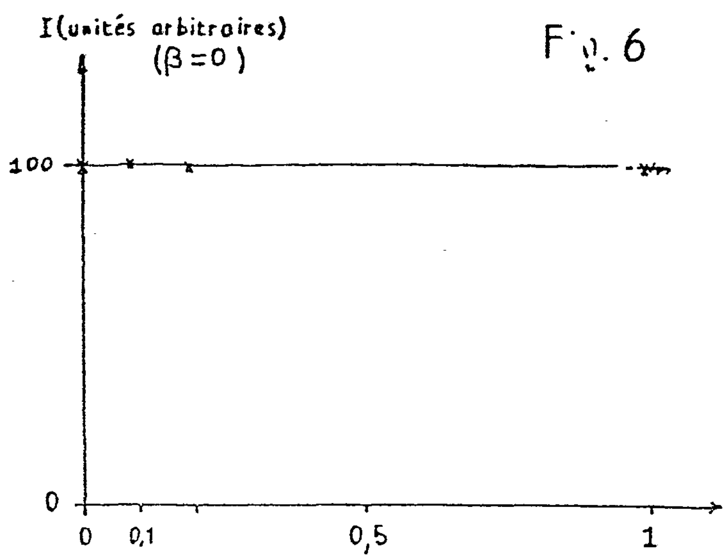
I (unités arbitraires)
(β = 0)
100
0
0
0,1
0,5
1

Fig. 6